# DEMANDE DE BREVET EUROPEEN

(11) **EP 2 065 769 A1**
(43) Date de publication de la demande: **03.06.2009**
(21) Numéro de dépôt: 07291434.4
(22) Date de dépôt: 30.11.2007
(51) Int. Cl.: G05B 19/042, E05F 15/00

(54) **Procédé de commande à haute disponibilité des systèmes portes ferroviaires système embarqué de mise en oeuvre et application aux accessoires et environnement de porte**

(71) Demandeur: FAIVELEY TRANSPORT, 93200 Saint-Denis (FR)
(72) Inventeur: Mercier, Christophe, 37270 Veretz (FR); Dupuy, Francis, 37510 Savonnires (FR)
(74) Mandataire: Novagraaf IP

(57) **Abrégé**

L'invention vise à augmenter la disponibilité des systèmes portes sans dégrader la fiabilité du système de commande. Pour ce faire, l'invention propose d'exploiter l'alternance de fonctionnement des systèmes portes disposées de part et d'autre d'une même voiture.

Un système embarqué selon l'invention comporte des moyens de contrôle (81g, 81d) de platines de commande (30g, 30d) associées pour transmettre des signaux d'autorisation d'ouverture exclusive de portes latérales. Les moyens de contrôle (81g, 81d) combinent un signal de vitesse basse (20s) et un signal de sélection de côté de validation (20g, 20d) pour réaliser dans chaque environnement (11g ;11d) des autorisations d'ouverture/fermeture (8g, 8gd ; 8d, 8dg) de la commande du moteur (60g ; 60d) de son environnement et du moteur (60d ; 60g) de l'environnement associé (11d ; 11g).

Applications aux accessoires et partie mécanique des systèmes portes ferroviaires (moteurs, serrures, haut-parleurs, etc) ainsi qu'à leur environnement porte (interface avec le réseau de communication).

## Description

L'invention concerne un procédé de commande à haute disponibilité des systèmes de portes ferroviaires, permettant de conserver en cas de panne la disponibilité en ouverture et fermeture des portes d'une voiture ferroviaire, et concerne également un système embarqué de mise en oeuvre d'un tel procédé. L'invention s'applique aux accessoires de portes, en particulier aux sorties sonores pour haut-parleurs et aux serrures de verrouillage, ainsi qu'aux environnements des portes en liaison avec les lignes de réseaux de communication ferroviaires.

On entend ici par voiture ferroviaire ou voiture une unité rigide de transport ferroviaire, un ensemble de voitures ferroviaires reliées entre elles constituant un train, une rame de métropolitain, un tramway, ou tout transport guidé par rails.

Un « système porte » comprend l'ensemble des moyens de commande, en particulier la platine de commande, les moyens mécaniques de la porte elle-même, ainsi que les accessoires électromécaniques, tels que capteurs, actionneurs, boutons poussoirs, buzzers, haut-parleurs, voyants, éléments fins de course, etc.

Statistiquement, les pannes de transport ferroviaire de passagers sont imputables aux portes d'accès dans une proportion d'environ 30 à 40%. De plus, l'électronique de commande des portes représente 40 à 50% de l'ensemble des pannes de ces portes.

Afin d'améliorer cette disponibilité, il est connu d'augmenter la périodicité des contrôles du matériel. Ainsi, le document EP 0 728 894 décrit une commande de secours pour permettre l'ouverture des portes en cas de défaillance de l'alimentation principale. Ce type de solution est coûteux et implique une immobilisation accrue des voitures.

Il est également bien connu d'adjoindre, au système existant, un système doublant les moyens de commande des portes pour conserver la commande en cas de défaillance du système. Cependant cette solution est également coûteuse et multiplie le nombre de composants à utiliser. Et cette multiplication induit une baisse sensible de fiabilité car le risque de panne augmente alors dans les mêmes proportions que le nombre de composants.

Ainsi, l'invention vise à augmenter la disponibilité des systèmes de portes sans dégrader la fiabilité du système de commande. Pour ce faire, l'invention propose d'exploiter l'alternance de fonctionnement des systèmes de portes disposées de part et d'autre d'une même voiture.

Plus précisément, l'invention a pour objet un procédé de commande à haute disponibilité de systèmes de portes ferroviaires d'une voiture, disposées le long de deux côtés longitudinaux opposés de la voiture, consistant à détecter une défaillance de commande d'un premier accessoire sollicité en ouverture ou en fermeture, à déléguer la commande défaillante à la commande opérationnelle d'au moins un accessoire associé, situé le long du côté longitudinal opposé, et à substituer la commande défaillante par ladite commande opérationnelle associée.

Un tel procédé permet de ne pas dupliquer les équipements d'un train tout en maintenant une haute disponibilité de fonctionnement des portes sollicitées.

Selon des modes particuliers du procédé:
- les accessoires associés sont gérés de manière automatique par un contrôle mutuel des commandes à travers des échanges périodiques entre les deux commandes, et une prise de contrôle d'une commande réputée défaillante en absence de détection périodique, par neutralisation de cette commande et par délégation des autorisations d'ouverture à la commande associée à partir d'une combinaison entre un signal de vitesse basse et un signal de sélection de côté de validation ;
- les informations d'environnement et des fonctionnalités de chaque porte sont analysées afin de détecter les anomalies de fonctionnement et, le cas échéant, opérer une nouvelle substitution ;
- lorsque la porte est équipée d'un codeur de position, les informations de position peuvent ne pas être rapatriées vers la commande de la porte associée, pour des raisons de gain de temps, et la porte défaillante est alors pilotée, en cas de défaillance, sur la base d'algorithmes de calcul de position.

L'invention se rapporte également à un système de commande embarqué à haute disponibilité de portes d'une voiture pour la mise en oeuvre du procédé. Ce système comporte des moyens de contrôle mutuel de platines de commande associées pour transmettre des signaux d'autorisation d'ouverture exclusive de l'une des deux séries de portes latérales opposées, et en ce que les moyens de contrôle combinent un signal de vitesse basse et un signal de sélection de côté de validation pour réaliser dans chaque environnement des autorisations d'ouverture/fermeture de la commande du moteur de son système et du moteur du système associé.
Chaque platine de commande de porte reçoit de préférence des signaux de position de la porte et émet des signaux de déclenchement des dispositifs de conditionnement environnemental, par exemple des lampes et des buzzers, ainsi que des moyens de commande de moteur d'entraînement de la porte correspondante.
Le terme « platine » désigne une unité de commande électronique, ici dédiée à la commande d'une porte de voiture et des accessoires de son environnement dépendant de son périmètre immédiat.

Selon des modes de réalisation particuliers :
- chaque platine de commande de porte reçoit des signaux de position de la porte et émet des signaux de déclenchement des dispositifs de conditionnement environnemental, ainsi que des moyens de commande du moteur d'entraînement de la porte correspondante ;
- chaque platine de porte comporte des moyens de commutation entre les moyens de commande du moteur d'une porte et les moyens de commande du moteur d'au moins une porte associée, disposée sur une paroi latérale opposée, lesdits signaux de position et de déclenchement pouvant alors être transmis à la platine de la porte associée pour lui déléguer la commande de porte ;
- les signaux de position et de déclenchement d'une porte sont numériques et transmis à la platine de la porte distante associée via un module d'entrée/sortie de signaux ;
- un bus de transmission réalise la transmission des données du module d'entrée/sortie de la platine d'une porte vers la platine de la porte associée ;
- des lignes de vie réalisent un contrôle mutuel en reliant les platines de chaque porte à chaque porte associée pour transmettre les signaux de contrôle à rafraîchissement périodique ;
- le déclenchement du processus de demande de secours est généré à partir d'un continuum de ligne de vie ;
- une durée de filtrage est prédéterminée entre un arrêt de variation du signal de contrôle de ligne et le déclenchement des moyens d'intervention sur une platine défaillante par comparaison de la valeur de chaque signal ;
- les moyens de contrôle sur une platine défaillante comprend des moyens de coupure de son alimentation, des sélecteurs d'alimentation du moteur correspondant vers le circuit de commande du moteur de la platine opérationnelle associée, en liaison avec les moyens de contrôle d'autorisation d'ouverture de portes des côtés opposés et des moyens de sécurisation du sens des moteurs ;
- les sélecteurs d'alimentation moteur entre deux platines associées activent, pour chaque platine, un circuit de pilotage de moteur à pont en « H » entre des bornes de sélection des moteurs à piloter, les bornes de prise de contrôle étant reliées aux bornes de mode secours par des liaisons, chaque circuit intégrant les moyens de sécurisation du sens des moteurs ;
- les moyens de contrôle d'autorisations d'ouverture sont sécurisés par un traitement des signaux de vitesse et d'autorisation d'ouverture ou de fermeture des portes de chaque côté selon une double suite logique de validation, positive et négative, afin de conditionner la sélection de prise de commande de motorisation d'une porte d'un côté par la validation d'une autorisation d'ouverture de ce côté ;

Afin d'assurer la continuité de fonctionnement de réseaux de communication de l'environnement de portes, la platine opérationnelle émule un « comportement réseau » de la platine défaillante associée, soit en neutralisant la platine défaillante soit en pilotant un « bypass » (dérivation) de la ligne réseau au niveau de la platine défaillante, maintenant ainsi la platine défaillante sous tension.

L'invention s'applique également aux accessoires des portes ferroviaires, en particulier les hauts-parleurs de diffusion d'information et les serrures de verrouilllage des portes.
Dans le cas où les accessoires sont des haut-parleurs d'environnements de portes ferroviaires, la commande défaillante de haut-parleur d'un environnement de porte étant déléguée à la commande opérationnelle de haut-parleur de l'environnement de la porte associée.

Avantageusement, la commande de platine défaillante d'un haut-parleur d'environnement de porte est déléguée à la commande de la platine associée d'un haut-parleur de secours de cet environnement.

Selon un autre mode de réalisation, chaque platine de commande de porte et la platine de la porte associée accèdent à un même module de génération de sons via des bus de transmission, chaque module fournissant des signaux sonores à au moins un haut-parleur de chaque environnement de porte, chaque module étant localisé dans chaque environnement de porte.

Dans le cas de serrures électriques de portes ferroviaires, une commutation de commande de chaque serrure, lors d'une délégation de commande en mode secours, est effectuée selon le procédé précédent et une sécurisation des commandes est réalisée par une porte logique d'autorisations d'ouverture d'un système de porte et une commande par la porte logique d'autorisations d'ouverture de l'environnement associé.

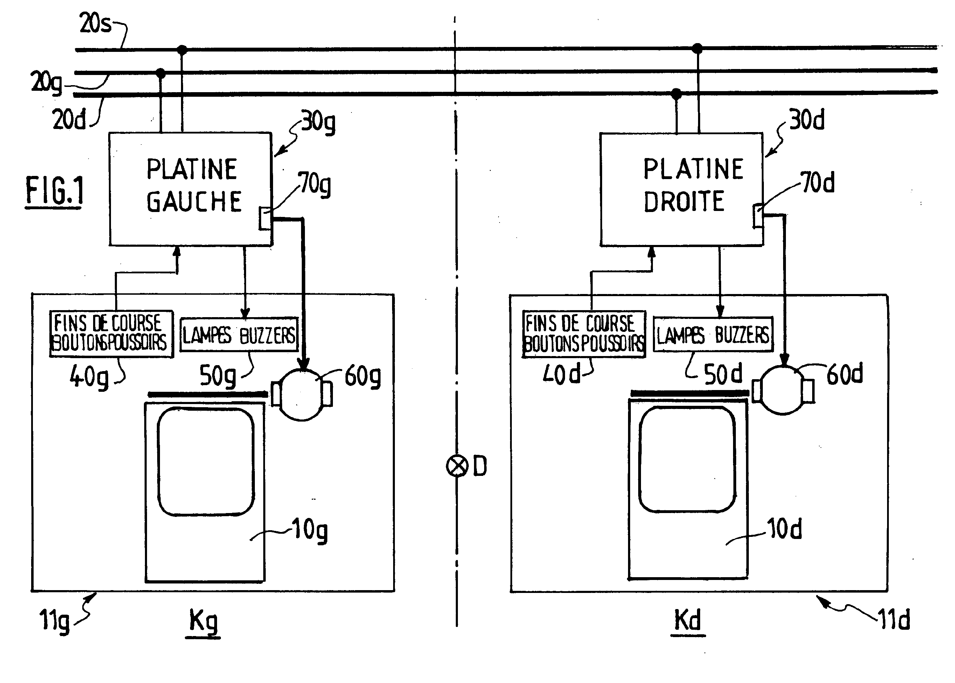

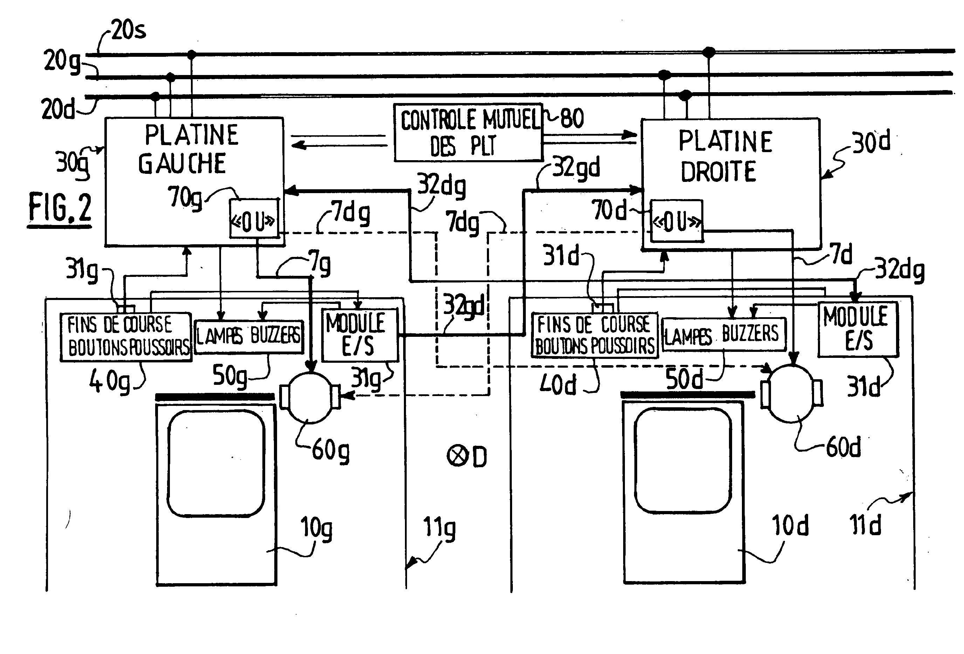

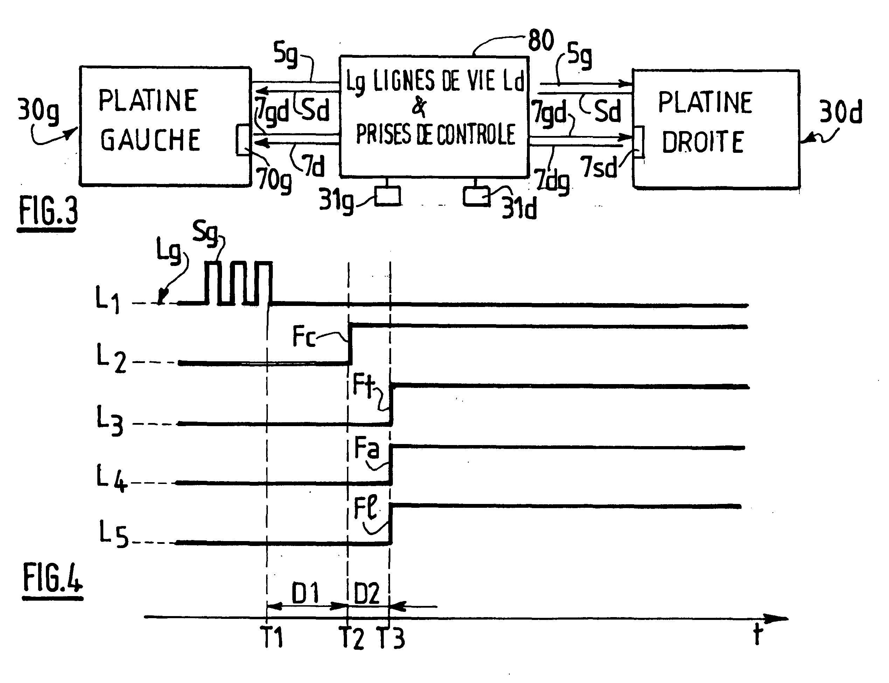

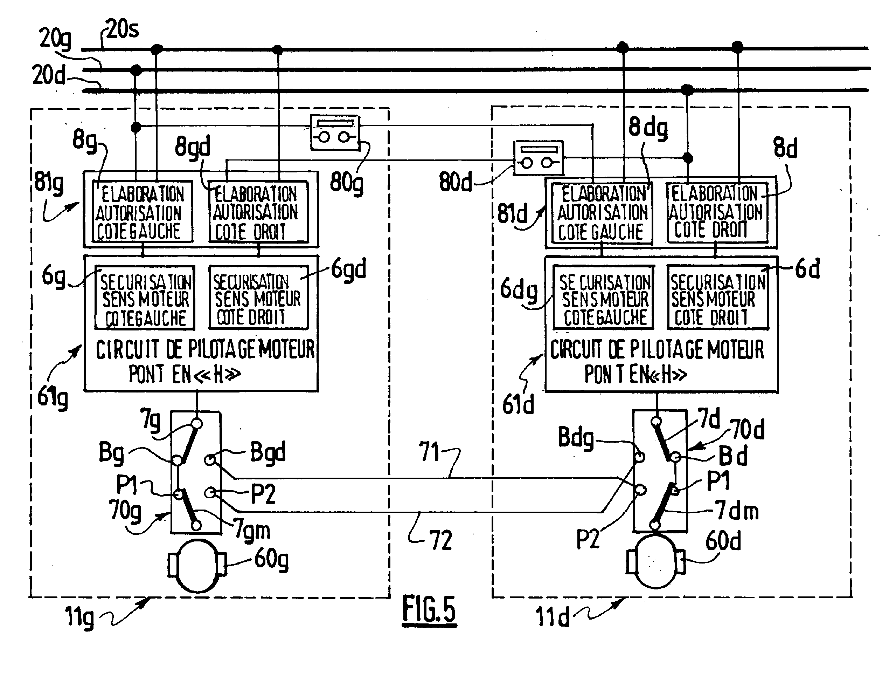

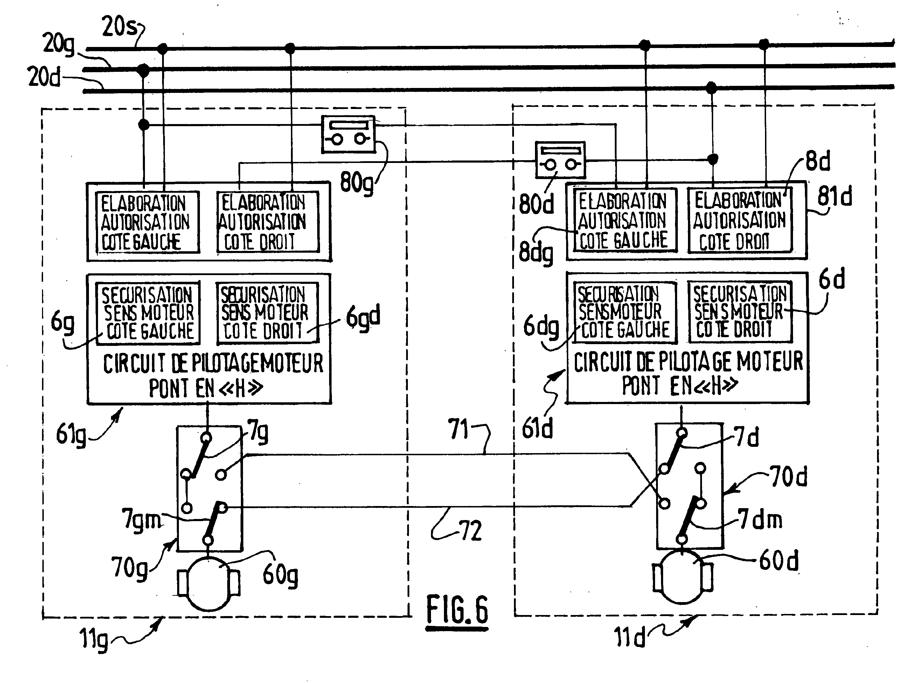

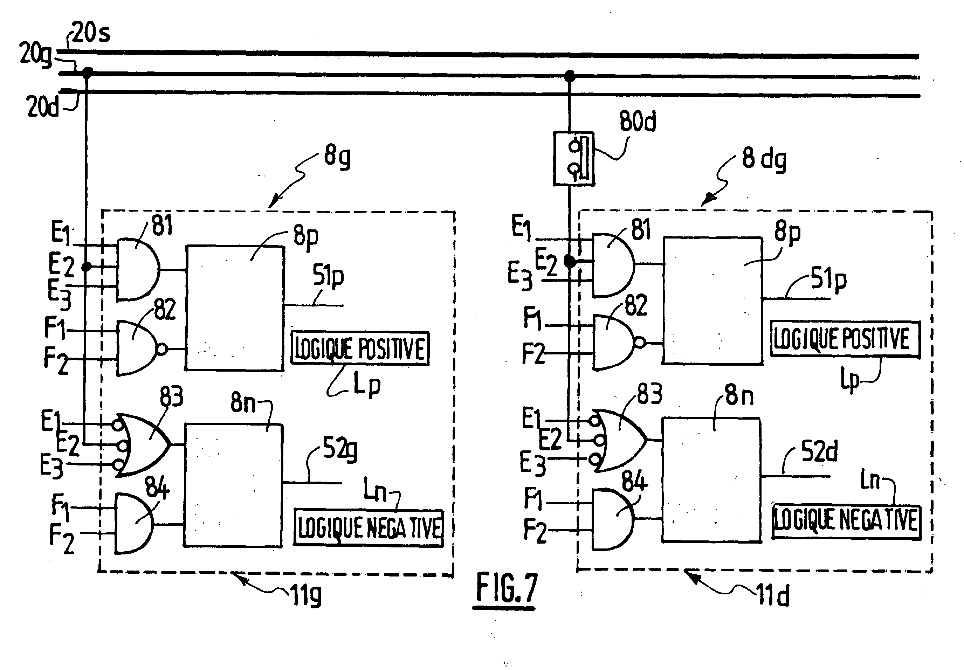

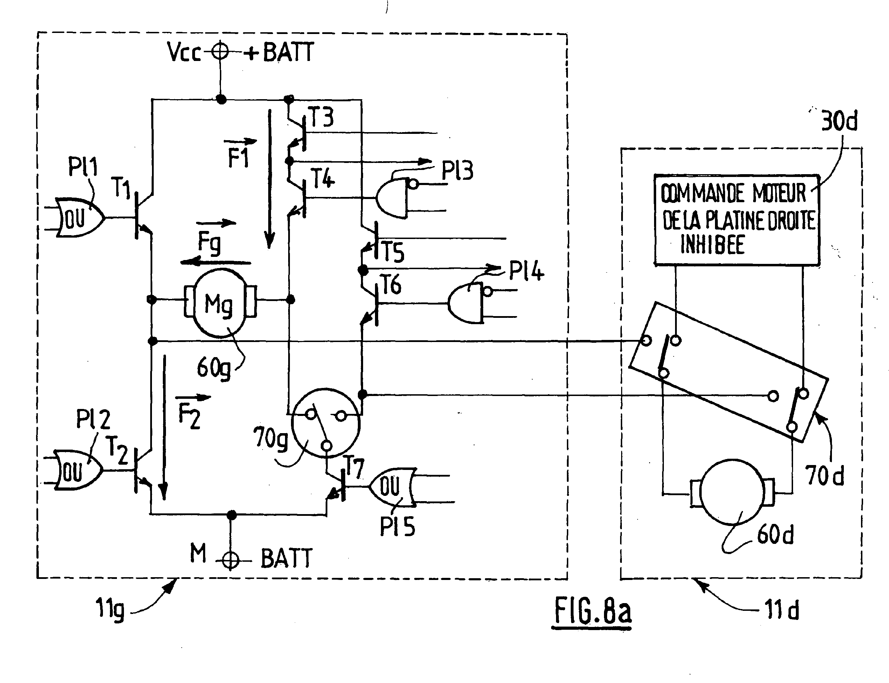

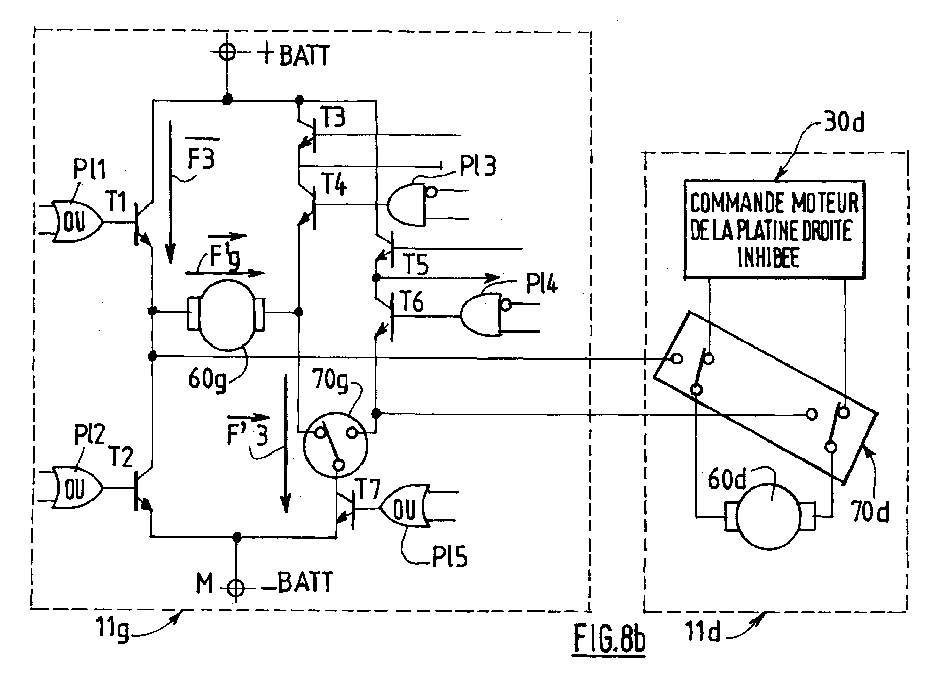

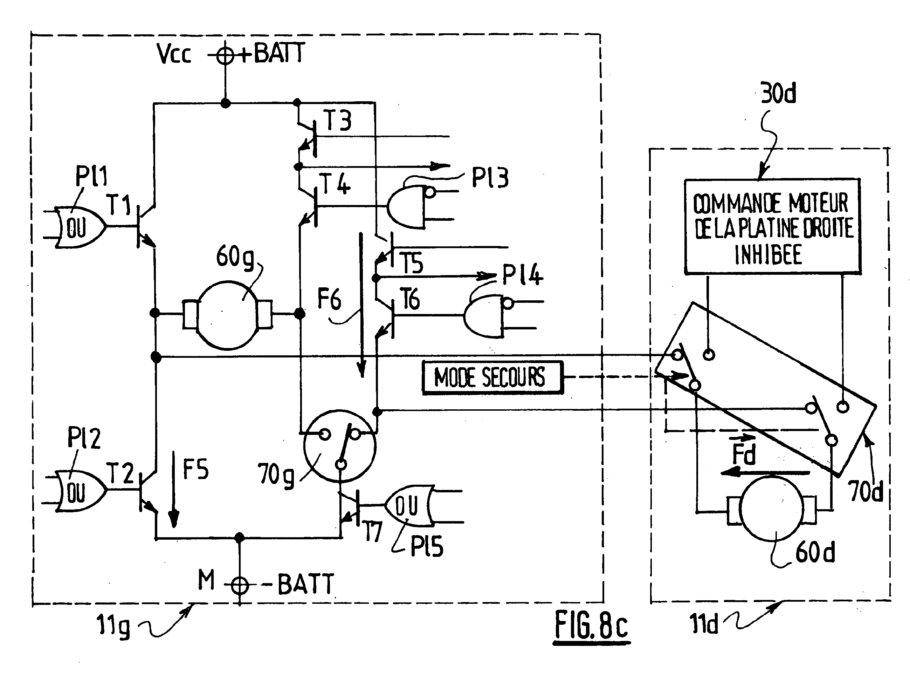

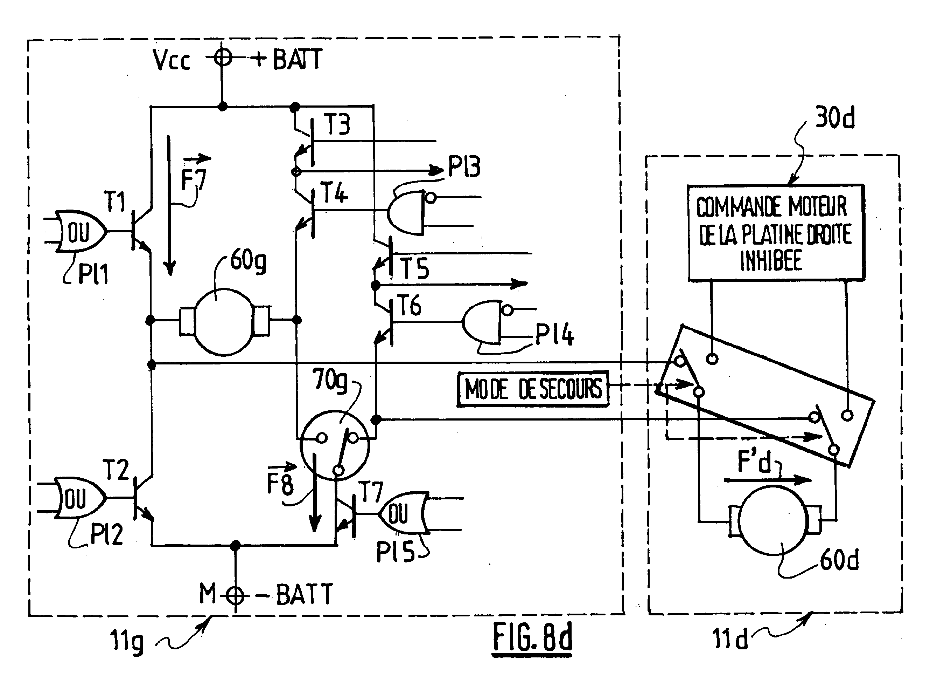

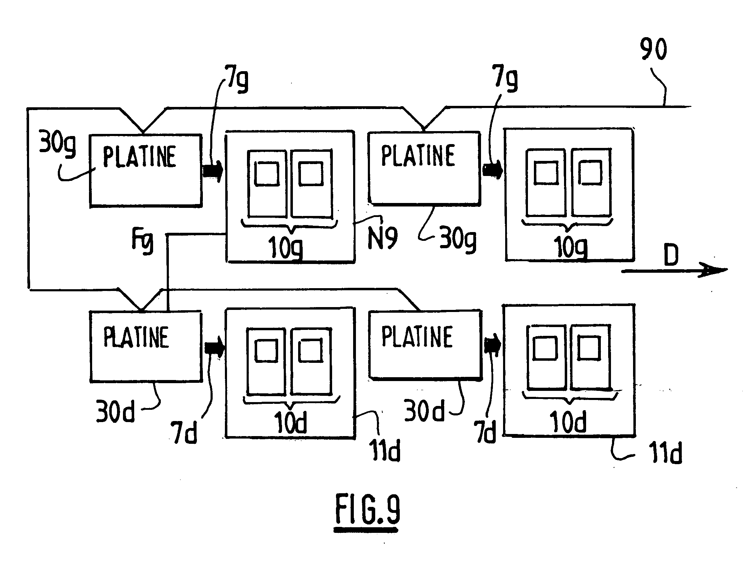

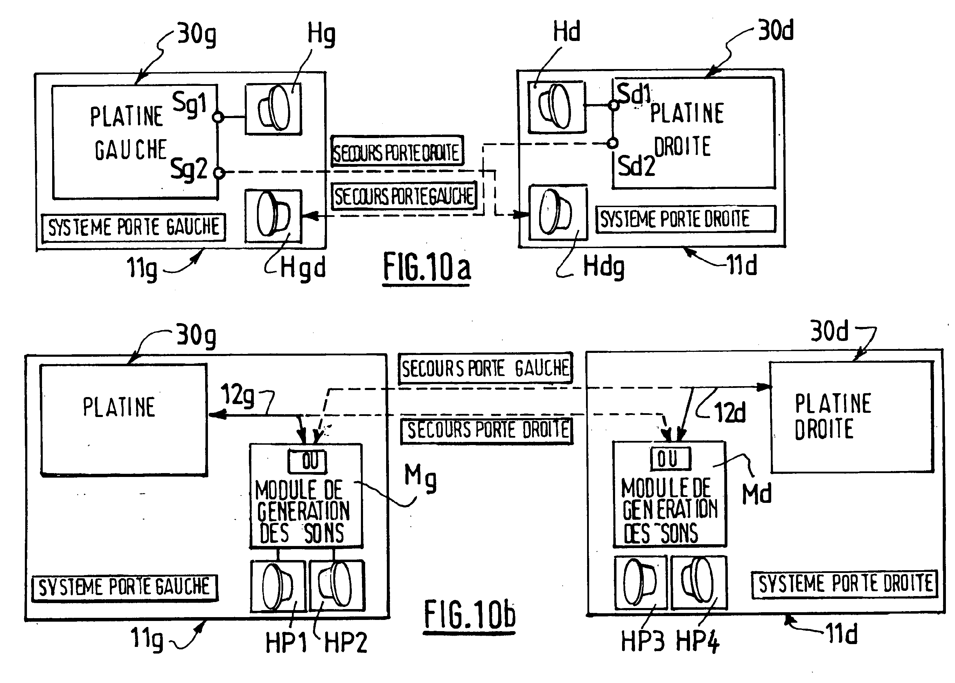

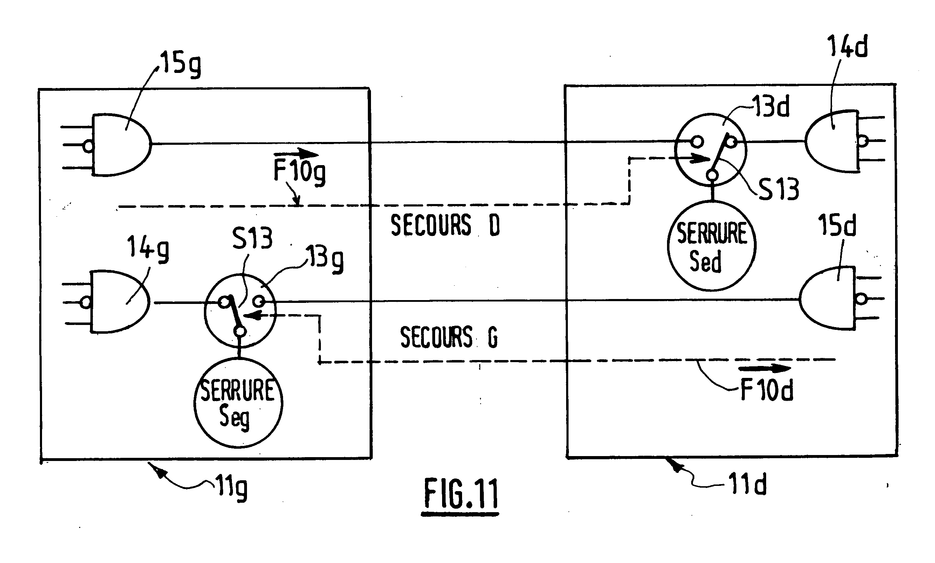

D'autres caractéristiques et avantages de l'invention ressortiront à la lecture détaillée d'un exemple de réalisation qui suit et qui fait référence aux figures annexées, représentant respectivement :
- en figure 1, une vue schématique d'une gestion de portes par deux systèmes latéraux, selon l'état de la technique ;
- en figure 2, une vue schématique d'une gestion de portes par un système de délégation de commande selon la présente invention;
- en figure 3, le schéma de contrôle mutuel des platines de commande des portes selon l'invention;
- en figure 4, un ensemble de chronogrammes illustrant la prise de contrôle de la commande de la platine gauche défaillante;
- en figure 5, un schéma du contrôle de sécurisation des commandes de sens moteur de deux portes associées en liaison avec un circuit de pilotage moteur;
- en figure 6, le schéma précédent lors d'une prise de contrôle de la platine gauche par la commande de la platine droite;
- en figure 7, un schéma des registres de génération des autorisations d'ouverture;
- en figures 8a et 8b, un schéma de motorisation en ouverture et fermeture lors d'une commande de la platine gauche pour la motorisation du moteur de porte gauche ;
- en figures 8c et 8d, un schéma de motorisation en ouverture et fermeture lors d'une prise de contrôle par la platine gauche de la commande de la platine droite pour la motorisation du moteur de porte;
- en figure 9, un schéma de fonctionnement de réseaux de communication utilisant l'ensemble des portes latérales en série associées selon l'invention;
- en figures 10a et 10b, un schéma illustrant une application de l'invention à la gestion de haut-parleurs de portes associées selon deux montages, sans ou avec module externe; et
- en figure 11, un schéma illustrant une application de l'invention aux serrures électriques de portes associées.

En référence à la figure 1, la vue représentée se rapporte au système de gestion, connu de l'état de la technique, d'une porte locale 10g, ici appelée « porte gauche » du fait de sa localisation sur le côté longitudinale gauche Kg de la voiture ferroviaire en marche selon la direction D, et d'une porte associée 10d, « porte droite », située sur le côté opposé Kd de la voiture.
Le système comporte des lignes 20g et 20d de transmission en série des signaux d'autorisation d'ouverture exclusive, respectivement, des portes latérales gauches, dont la porte 10g, et droites, dont la porte 10d.
Les moyens de transmission comportent également une ligne 20s de signal de vitesse basse pour valider les signaux d'autorisations transmis.
Les moyens de transmission de signaux de chaque série sont couplés à des platines de commande, respectivement 30g et 30d, des portes correspondantes 10g et 10d. Chaque platine de commande de porte reçoit des signaux de position de la porte à partir des contacts de fin de course et reçoit des boutons poussoirs 40g et 40d. La platine émet par ailleurs des signaux de déclenchement des dispositifs de conditionnement environnemental 50g et 50d, par déclenchement de lampes et de buzzers, et comporte des moyens de commande du moteur d'entraînement, respectivement 60g et 60d, de la porte correspondante. Les équipements (bouton poussoir, lampe, buzzer, moteur, etc.) de chaque porte 10g, 10d, sont disposés dans un environnement 11g, 11d, de cette porte.
Les moyens et liaisons de base pour mettre en oeuvre l'invention sont illustrés en référence à l'exemple de la figure 2, où les mêmes références désignent les mêmes accessoires. Dans cet exemple, les platines 30g et 30d et les environnements respectifs 11g et 11d des portes 10g et 10d situées en vis-à-vis, de chaque côté de la voiture, sont associés.
Pour ce faire, chaque commande moteur des platines 30g et 30d de porte comporte également un moyen de commutation de puissance moteur 70g et 70d entre les liaisons de commande 7g et 7gd (respectivement 7d et 7dg) des moteurs 60g et 60d (respectivement 60d et 60g) d'entraînement des portes associées 10g et 10d. Les liaisons de commande 7gd et 7dg d'une platine de porte pour le moteur d'une porte associée sont présentées en traits pointillés sur la figure 2.
Dans la présente description, les commutateurs peuvent être des relais, des transistors ou autres accessoires de commutation équivalent.
Dans des variantes, des portés non disposées en vis-à-vis sont associées, ou bien encore chaque porte est associée à plus d'une porte sur le côté opposée.
Toujours en référence à la figure 2, chaque platine 30g et 30d de commande de porte reçoit des signaux d'un codeur 31g et 31d de position de la porte correspondante 10g et 10d, correspondant aux fins de course de boutons-poussoirs 40g et 40d. En parallèle, chaque platine 30g et 30d émet des signaux de déclenchement des dispositifs respectifs 50g et 50d de conditionnement environnemental, des lampes et buzzers dans l'exemple.
En cas de défaillance, les signaux de position et de déclenchement sont transmis à la platine de la porte associée pour lui déléguer la commande défaillante.
Ces signaux numériques de position et de déclenchement de porte, 10g ou 10d, sont alors transmis à la platine, 30d ou 30g, de la porte associée, 10d ou 10g, via un module d'entrée/sortie de signaux 31g, respectivement 31d, et un bus de transmission 32gd, respectivement 32dg.

La figure 3 illustre par un schéma le contrôle mutuel des platines 30g et 30d de commande de portes associées, selon l'exemple de réalisation.
Les signaux de commande d'ouverture et de fermeture des portes sont gérés, de manière sécuritaire, par un contrôle mutuel des commandes des portes à travers:
- des signaux périodiques Sg et Sd échangés entre les deux commandes de porte avec un rafraîchissement périodique, formant des « lignes de vie » Lg et Ld , et
- en cas de reconnaissance d'absence de variation d'un signal périodique, dans une unité 80 de contrôle mutuel des lignes de vie, une prise de contrôle de la commande moteur de la platine réputée défaillante, par la commande moteur de la platine opérationnelle.
   La prise de contrôle de cette commande se traduit par:

- la coupure de l'alimentation de la platine défaillante 30g ou 30g;
- le basculement des commutateurs 70d et 70g sur les liaisons 7dg ou 7gd de commande du moteur de la commande défaillante, pour déléguer les autorisations de gestion d'ouverture/fermeture à la commande opérationnelle;
- l'activation des traitements logiques, par le module d'entrée/sortie 31g ou 31d monté sur la porte défaillante, vers la platine opérationnelle 30d ou 30g.

Les chronogrammes de la figure 4 explicitent plus précisément la succession dans le temps « t » des séquences de temporisation d'une prise de contrôle de la platine droite lors d'une défaillance de la platine gauche.
L'interruption de la variation du signal Sg de rafraîchissement périodique de la ligne de vie Lg (ligne L1) à l'instant T1, provoque le déclenchement de la reconnaissance de demande de secours par le module de contrôle à l'instant T2 (front Fc, ligne L2) après une durée de filtrage D1 égale à 1s dans l'exemple. Une comparaison de valeur de chaque signal périodique, Sg dans l'exemple, détecte une absence de variation.
Le déclenchement de la demande de secours induit à l'instant T3, après une durée de filtrage D2 (égale à 500 ms dans l'exemple), la mise hors tension (front Ft, ligne L3) de la platine défaillante, ainsi que la prise en compte de l'autorisation de gestion par la platine opérationnelle (front Fa, ligne L4) et l'aiguillage des liaisons de commande moteur vers la commande moteur de la platine opérationnelle (front FI, ligne L5).

La figure 5 détaille, dans un exemple de réalisation, les modules de contrôle 81g (61d) des registres d'autorisation d'ouverture/fermeture de porte, ainsi que les circuits de commande et de pilotage des moteurs.
Chaque module de contrôle 81g (respectivement 81d) pour chaque environnement de porte 11g (11d) est en liaison avec un circuit de pilotage moteur à « pont en H » 61g (61d). Entre le circuit à pont en H et le moteur 60g (60d), un commutateur 70g (70d) de pilotage du moteur 60g (60d) permet de basculer la commande d'une platine de porte à la platine associée.

Chaque module 81g (81d) comporte des registres 8g et 8gd (respectivement 8d et 8dg) de génération d'autorisation d'ouverture de la porte locale et de la porte associée, les registres d'autorisation d'un même environnement de porte, 8g et 8dg (8d et 8gd), recevant l'information de signal d'autorisation du côté correspondant 20g (20d), ainsi que l'information de signal de vitesse 20s.

Les registres d'autorisation d'ouverture d'un même système de porte, à savoir 8g et 8dg (respectivement 8d et 8gd), sont réglés par une unité spécifique de prise de contrôle mutuelle 80g (80d) de chaque environnement 11g (11d) par l'environnement associé.

Les registres d'autorisation 8g et 8gd (8d et 8dg) d'un même environnement de porte 11g (11d), sont reliés à des modules de sécurisation du sens moteur 6g et 6gd (6d et 6dg), du pont en H correspondant 61g (61d).

Les commutateurs 70g et 70d sont montés ensemble via les liaisons 71 et 72. Chaque commutateur 70g (70d) est double et se compose, dans chaque environnement de porte 11g (11d), d'un sélecteur de moteur à piloter 7g (7d) entre les bornes Bg et Bgd (Bd et Bdg) et d'un sélecteur de modes 7gm (7dm) entre un mode nominal (position P1) et un mode de secours (position P2).
Lors de la prise de contrôle d'une platine sur l'autre platine, la platine 30d de la porte droite sur la platine 30g de la porte gauche dans l'exemple illustré en figure 6 (qui reprend les mêmes accessoires décrits en référence à la figure 5), l'unité de prise de contrôle mutuelle 80d est active.
De plus, le moteur 60g est débranché par le sélecteur de mode 7gm en position mode de secours (position P2), alors que le sélecteur de moteur 7d est positionné sur le moteur 60g (borne Bdg).

La génération des autorisations d'ouverture des côtés, par des entrées logiques, est plus particulièrement détaillée en référence à la figure 7. L'exemple se rapporte à la prise de contrôle de l'environnement 11 g de la porte gauche.
L'autorisation du côté gauche est générée par les registres d'autorisation d'ouverture gauche 8g et 8dg qui comporte l'élaboration de logiques combinatoires positive et négative, ces registres recevant l'information d'autorisation gauche 20g, ainsi que le signal de vitesse basse 20s.
La séquence combinatoire de logique positive Lp comporte, pour la génération d'autorisation côté gauche, une bascule 8p avec en entrées :
- une porte logique « and » 81 ayant en entrées : E1, le signal de vitesse 20s ; E2, l'information d'autorisation porte gauche 20g et E3, l'information de commande numérique d'autorisation d'ouverture côté gauche, et
- une porte logique « nand » 82 ayant en entrées E1 et E3, le signal de vitesse 20s et l'information de commande numérique.
   Les sorties S1g et S1d des bascules 8p fournissent les valeurs du niveau d'autorisation d'ouverture côté gauche en logique positive.

La séquence combinatoire de logique négative Ln comporte également une bascule 8n avec, en entrées, une porte « or » 83 et une porte « and » 84. Les entrées des portes 83 et 84 sont identiques à celles des portes de la logique positive. Les sorties S2g et S2d des bascules 8n fournissent les valeurs du niveau d'autorisation d'ouverture côté gauche en logique négative

Les figures 8a et 8b illustrent un schéma de motorisation, respectivement en ouverture et en fermeture, lors d'une commande moteur du moteur 60g de la porte gauche par la commande moteur de la platine gauche, c'est-à-dire lors de la commande nominale du moteur de porte gauche. Par contraste, les figures 8c et 8d illustrent un schéma de motorisation, respectivement en ouverture et en fermeture, après la prise de contrôle de la commande moteur du moteur 60d de la porte droite par la commande de la platine gauche.
Le commutateur 70d de l'environnement droit 11 d de la porte droite est basculé pour activer si besoin le mode de secours de commande du moteur 60d de la porte droite et le commutateur 70g de l'environnement 11g de la porte gauche est en position de pilotage du moteur 60g.

La motorisation en ouverture de la porte gauche par la platine gauche 30g est illustrée en figure 8a. Sur cette figure apparaissent, dans l'environnement 11g de la porte gauche, les transistors T1 à T7 du circuit de commande du pont en H, les transistors étant passants ou bloquants selon l'état des portes logiques PI1 à PI5. Les transistors T1 et T7 sont dédiés à la commande de fermeture des côtés gauche et droit, et les transistors T2 à T6 à la commande d'ouverture des côtés gauche et droit.
En particulier, les transistors T3 et T4 utilisent l'autorisation d'ouverture gauche en logique positive et négative pour commander en ouverture la porte gauche, et les transistors T5 et T6 utilisent l'autorisation d'ouverture droite pour commander en ouverture la porte droite. Les deux séries de transistors, T3-T4 et T5-T6, sont montées en parallèle. Le moteur est alimenté par la borne d'alimentation en courant continu Vcc et une mise à la masse « M ».

Lors de la motorisation d'ouverture de l'environnement gauche 11g, les transistors de fermeture T1 et T7 sont bloqués et les transistors de commande d'ouverture de porte gauche T3 et T4, en logique positive et négative, ainsi que le transistor T2 sont passants (flèches F̅₁ et F̅₂). Les transistors d'ouverture de la porte droite par la platine gauche, T5 et T6, sont en veille. Dans ces conditions le moteur 60g tourne dans le sens correspondant au sens de la flèche F̅_{g}.

Les figures 8b, 8c et 8d reprennent les mêmes accessoires que ceux de la figure 8a avec les mêmes signes de référence.
En motorisation en fermeture de la porte gauche 60g par la platine gauche 30g (figure 8b):
- les transistors de fermeture T1 et T7 sont passants (flèches F̅₃ et F̅'₃) et
- les transistors de commande d'ouverture de porte gauche T2, T3 et T4 sont bloqués.
   Le moteur tourne alors dans le sens de fermeture correspondant à la flèche F̅'_{g}, c'est-à-dire dans le sens contraire au sens précédent correspondant à l'ouverture.

Lors d'une délégation de commande moteur de porte droite 60d par la platine gauche 30g, le commutateur 70g est en position de pilotage du moteur 60d de la porte droite et les motorisations en ouverture et en fermeture sont déclenchées de la façon suivante:
- en motorisation d'ouverture (figure 8c) du moteur droit 60d (flèche F̅_{d}), les transistors de fermeture T1 et T7 ainsi que les transistors de commande d'ouverture de porte gauche T3 et T4, en logique positive et négative, sont bloqués ou en veille; les transistors d'ouverture T2 (commande de porte droite), T5 et T6 (autorisations d'ouverture en logique positive et négative) sont passants (flèches F̅₅ et F̅₆);
- en motorisation de fermeture (figure 8d) du moteur 60d (flèche F̅'_{d}), les transistors T1 et T7 de commandes de fermeture de porte gauche (flèches F̅₇ et F̅₈) sont passants, alors que les transistors de commande d'ouverture T2, T3 à T6 sont bloqués ou en veille. Le moteur 60d tourne alors dans le sens de fermeture correspondant à la flèche F̅'_{d}, c'est-à-dire dans le sens contraire au sens précédent correspondant à l'ouverture.

Une application de l'invention concerne la gestion de différents réseaux de communication (CAN, LON, MVB, ETHERNET, PROFINET, etc.), portés par l'environnement portes des lignes ferroviaires lors d'une défaillance de commande de platine, comme illustré en référence à la figure 9.
La communication est gérée le long des différents systèmes 11g et 11 d (des portes 10g et 10d) montés en série. Les platines 30g et 30d commandent les portes 10g et 10d à travers les commandes 7g et 7d.
Afin de prendre en compte la gestion de la communication du réseau 90, une platine opérationnelle 30d émule le « comportement réseau » d'une platine défaillante associée 30g selon le procédé précédent. La défaillance de la platine est matérialisée par une croix sur la liaison 7g correspondante. La prise de contrôle matérialisée par la flèche F̅₉ permet alors d'assurer une telle émulation afin d'assurer la continuité de gestion.
Dans le cas d'un câblage ETHERNET ou PROFINET en « daisy chain » (structure en guirlande), la platine assistée reste sous tension pour assurer un bypass (une dérivation) de la ligne réseau au niveau de l'abonné.
En référence aux figures 10a et 10b, l'application de l'invention à la gestion des haut-parleurs de portes associées est illustrée par deux exemples.
La solution présentée en figure 10a suppose que chaque environnement 11g (11d) de platine 30g (respectivement 30d) incorpore un module de génération de sons et présente deux ports de sortie « son » Sg1 et Sg2 (respectivement Sd1 et Sd2). Les ports de sortie de chaque platine alimentent un haut-parleur local, Hg (Hd), et un haut-parleur de secours, Hgd (Hdg), situé dans l'environnement de la porte associée. Les prises de contrôle des hauts-parleurs en cas de défaillance se fait, dans cet exemple, par les mêmes mécanismes de délégation que pour les moteurs: une platine 30g (30d) commande le haut-parleur de secours de la porte associée.
En variante, un seul haut-parleur par porte est prévu et le secours porte sur la défaillance de la commande d'un haut-parleur. Dans ce cas, la commande du haut-parleur est déléguée à la commande opérationnelle de la platine de la porte associée.

Selon un autre exemple de réalisation (figure 10b), la platine 30g et la platine 30d associée accèdent à deux modules de génération de sons, Mg et Md, localisés dans chaque système 11g (11d) de chaque porte. La transmission de signaux de commande des platines aux modules de génération de sons est assurée par des bus de transmission dédiés 12g (12d).
Le module Mg alimente deux hauts-parleurs HP1 et HP2 pour la porte gauche, et le module Md les hauts-parleurs HP3 et HP4 pour la porte droite. Chaque module fournit des signaux sonores à au moins un haut-parleur de la porte correspondante.
En mode nominal, chaque platine 30g (30d) contrôle le module de générations de sons correspondant Mg (Md). En mode de secours, la commande de la platine défaillante 30g (30d) est déléguée à la commande de la platine associée 30d (30g) via la portion, en traits pointillés sur la figure 10b, du bus 12d (12g) correspondant.
Une autre application se rapporte aux serrures électriques des portes associées 10g et 10d, en référence à la figure 11.
Chaque système 11g (11d) de porte est équipé d'un commutateur 13g (13d) de commande de la serrure Seg (Sed) de la porte correspondante.
En mode nominal, la commande de la serrure Seg (Sed) via la porte logique 14g (14d) utilisant les autorisations positive et négative d'ouverture est assurée par la platine correspondante.
En mode secours, la commande de la serrure Seg (Sed), via la bscule du sélecteur S13 du commutateur 13g (13d) est déléguée à la platine de commande du système de porte associé 11d (11g). La commande s'effectue au travers de la porte logique 15d (15g), la porte logique 15d (15g) utilisant la double logique d'autorisation positive et négative correspondant à la flèche F̅_{10*g*} (F̅_{10*d*}).

L'invention n'est pas limitée aux exemples de réalisation décrits et représentés.
Il est par exemple possible de prévoir une adaptation de l'invention notamment à l'ouverture/fermeture des portes internes de vestibule d'une voiture, aux moteurs de climatisation et aux commandes de freins d'une voiture.

## Revendications

1. Procédé de commande à haute disponibilité de systèmes de portes ferroviaires (10g, 10d) d'une voiture, disposées le long de deux côtés (Kg, Kd) longitudinaux opposés de la voiture, consistant à détecter une défaillance de commande (30g, 30d) d'un premier système (60g, 60d ; Hg, Hd ; Seg, Sed) sollicité en ouverture ou en fermeture, à déléguer la commande défaillante (30g, 30d) à la commande opérationnelle (30d, 30g) d'au moins un accessoire associé (60d, 60g ; Hd, Hg ; Sed, Seg), situé le long du côté longitudinal opposé, et à substituer la commande défaillante par ladite commande opérationnelle associée.

2. Procédé de commande selon la revendication 1, dans lequel les accessoires associés sont gérées de manière automatique par un contrôle mutuel (80) des commandes (30g, 30d) à travers des échanges périodiques (Sg, Sd) entre les deux commandes, et une prise de contrôle d'une commande réputée défaillante en absence de détection périodique, par neutralisation de cette commande (L3) et par délégation des autorisations d'ouverture (L4, L5) à la commande associée à partir d'une combinaison entre un signal de vitesse basse (20s) et un signal de sélection de côté de validation (20g, 20d).

3. Procédé de commande selon la revendication 1 ou 2, dans lequel les informations d'environnement et de fonctionnalités (40g, 50g ; 40d, 50d) de chaque porte (10g, 10d) sont analysées afin de détecter des anomalies de fonctionnement et, le cas échéant, opérer une nouvelle substitution.

4. Procédé de commande selon l'une quelconque des revendications précédentes, dans lequel, lorsque la porte (10g, 10d) est équipée d'un codeur de position (31g, 31d), les informations de code ne sont pas rapatriées vers la commande (30d, 30g) de la porte associée (10d, 10g) et la porte défaillante (10g, 10d) est alors pilotée sur la base d'algorithmes de calcul de position.

5. Système de commande embarqué à haute disponibilité de portes d'une voiture pour la mise en oeuvre du procédé selon l'une quelconque des revendications précédentes, **caractérisé en ce qu'**il comporte des moyens de contrôle mutuel (80, 80g, 80d) de platines de commande (30g, 30d) associées pour transmettre des signaux d'autorisation d'ouverture (Sg, Sd) exclusive de l'une des deux séries de portes latérales opposées, et **en ce que** les moyens de contrôle (81g, 91d) combinent un signal de vitesse basse (20s) et un signal de sélection de côté de validation (20g, 20d) pour réaliser dans chaque environnement (11g ; 11d) des autorisations d'ouverture/fermeture (8g, 8gd ; 8d, 8dg) de la commande du moteur (60g ; 60d) de son environnement et du moteur (60d ; 60g) de l'environnement associé (11d ; 11g).

6. Système de commande embarqué selon la revendication précédente, dans lequel chaque platine (30g, 30d) de commande de porte reçoit des signaux de position (31g, 31d) de la porte et émet des signaux de déclenchement des dispositifs de conditionnement environnemental (50g, 50d), ainsi que des moyens de commande (61g, 61d) du moteur d'entraînement (60g, 60d) de la porte correspondante.

7. Système de commande embarqué selon la revendication 5 ou 6, dans lequel chaque platine de porte (30g, 30d) comporte des moyens de commutation (70g, 70d) entre les moyens de commande (61g) du moteur (60g) d'une porte et les moyens de commande (61d) du moteur (60d) d'au moins une porte associée, disposée sur une paroi latérale opposée, lesdits signaux de position et de déclenchement pouvant alors être transmis (31g, 32gd ; 31d, 32dg) à la platine de la porte associée pour lui déléguer la commande de porte.

8. Système de commande embarqué selon la revendication précédente, dans lequel les signaux de position et de déclenchement d'une porte sont numériques et transmis à la platine de la porte distante associée via un module d'entrée/sortie de signaux (31g, 31d).

9. Système de commande embarqué selon la revendication précédente, dans lequel un bus de transmission (32gd, 32dg) réalise la transmission des données du module d'entrée/sortie (31g, 31d) de la platine (30g) d'une porte (10g) vers la platine (30d) de la porte associée (10d).

10. Système de commande embarqué selon l'une quelconque des revendications 5 à 9, dans lequel des lignes de vie (Lg, Ld) réalisent un contrôle mutuel en reliant les platines (30g, 30d) de chaque porte à chaque porte associée pour transmettre les signaux de contrôle à rafraîchissement périodique.

11. Système de commande embarqué selon la revendication précédente, dans lequel le déclenchement du processus de demande de secours (L2) est généré à partir d'un continuum de ligne de vie (L1).

12. Système de commande embarqué selon la revendication 10 ou 11, dans lequel une durée de filtrage (D1) est prédéterminée entre un arrêt de variation du signal de contrôle (Sg, Sd) de ligne (Lg Ld) et le déclenchement des moyens d'intervention sur une platine défaillante (30g, 30d) par comparaison de la valeur de chaque signal.

13. Système de commande embarqué selon l'une quelconque des revendications 7 à 12, dans lequel les moyens de contrôle sur une platine défaillante (30g, 30d) comprend des moyens de coupure de son alimentation (L3), des sélecteurs (7g, 7gm ; 7d, 7dm) d'alimentation du moteur correspondant (60g, 60d) vers le circuit de commande (61d, 61g) du moteur (60d, 60g) de la platine opérationnelle associée, en liaison avec les moyens de contrôle d'autorisation d'ouverture (81g, 81d) de portes des côtés opposés et des moyens de sécurisation du sens des moteurs (6g, 6gd ; 6d, 6dg).

14. Système de commande embarqué selon la revendication précédente, dans lequel les sélecteurs d'alimentation moteur entre deux platines associées activent, pour chaque platine, un circuit de pilotage de moteur à pont en « H » (61g, 61d) entre des bornes de sélection (Bg, Bgd ; P1 P2 ; Bd, Bdg) des moteurs (60g, 60d) à piloter, les bornes de prise de contrôle (Bgd, Bdg) étant reliées aux bornes de mode secours (P1, P2) par des liaisons (71, 72), chaque circuit intégrant les moyens de sécurisation du sens des moteurs (6g, 6gd ; 6d, 6dg).

15. Système de commande embarqué selon l'une quelconque des revendications 5 à 14, dans lequel les moyens de contrôle d'autorisations d'ouverture (81g, 81d) sont sécurisés par un traitement des signaux de vitesse (20s) et d'autorisation d'ouverture ou de fermeture des portes de chaque côté (20g, 20d) selon une double suite logique de validation (Lp, Ln), positive et négative, afin de conditionner la sélection de prise de commande de motorisation d'une porte d'un côté par la validation d'une autorisation d'ouverture de ce côté.

16. Système de commande embarqué selon l'une quelconque des revendications 5 à 15, dans lequel, afin d'assurer la continuité de fonctionnement de réseaux de communication de l'environnement ferroviaire, la platine opérationnelle (30d) émule un comportement réseau de la platine défaillante associée (30g), soit en neutralisant la platine défaillante soit en pilotant un bypass de la ligne réseau au niveau de la platine défaillante (30g), maintenant ainsi la platine défaillante sous tension.

17. Procédé à haute disponibilité selon l'une quelconque des revendications 1 à 4, dans lequel les accessoires sont des haut-parleurs (Hg, Hd) d'environnements de portes ferroviaires (10g, 10d), la commande défaillante (30g, 30d) de haut-parleur d'un environnement (11g, 11d) de porte étant déléguée à la commande opérationnelle (30d, 30g) de haut-parleur de l'environnement (11d, 11 g) de la porte associée.

18. Procédé à haute disponibilité selon la revendication précédente, dans lequel la commande de platine défaillante (30g, 30d) d'un haut-parleur (Hg, Hd) d'environnement (11g, 11d) de porte est déléguée à la commande de la platine associée (30d, 30g) d'un haut-parleur de secours (Hgd, Hdg) de cet environnement (11 g, 11 d).

19. Procédé à haute disponibilité selon l'une quelconque des revendications 1 à 4, dans lequel les accessoires sont des haut-parleurs (Hp1, Hp2 ; Hp3 , Hp4) d'environnement (11g, 11d) de portes ferroviaires, **caractérisé en ce que** chaque platine (30g) de commande de porte et la platine (30d) de la porte associée accèdent à un même module de génération de sons (Mg, Md) via des bus de transmission (12g, 12d), chaque module (Mg, Md) fournissant des signaux sonores à au moins un haut-parleur (Hp1, Hp2 ; Hp3, Hp4) de chaque environnement de porte (11g ; 11d), chaque module (Mg, Md) étant localisé dans chaque environnement de porte (11, 11d).

20. Procédé à haute disponibilité selon l'une quelconque des revendications 1 à 4, dans lequel les accessoires sont des serrures électriques (Seg, Sed) d'environnements (11 g, 11 d) de portes ferroviaires, **caractérisé en ce qu'**une commutation (13g, 13d) de commande de chaque serrure, lors d'une délégation de commande en mode secours, est effectuée entre une commande de serrure par une porte logique (14g, 14d) d'autorisations d'ouverture d'un environnement (11g, 11d) de porte et une commande par la porte logique 15g (15d) d'autorisations d'ouverture de l'environnement associé (11d, 11g).
